# EUROPÄISCHE PATENTANMELDUNG

(11) **EP 1 061 047 A1**
(43) Veröffentlichungstag der Anmeldung: **20.12.2000**
(21) Anmeldenummer: 00108882.2
(22) Anmeldetag: 26.04.2000
(51) Int. Cl.: C02F 1/58, C02F 1/02

(54) **Verfahren zur Entfernung von organischen Peroxiden aus Prozesswässern**

(30) Priorität: 04.06.1999 DE 19925542
(71) Anmelder: Phenolchemie GmbH & Co. KG, 45966 Gladbeck (DE)
(72) Erfinder: van Barneveld, Heinrich, Dr., 46244 Bottrop (DE); Ullrich, Jochen, Dr., 45966 Gladbeck (DE); Jordan, Wilfried, Dr., 46282 Dorsten (DE)
(74) Vertreter: Olbricht, Gerhard, Dr.

(57) **Zusammenfassung**

Es wird ein Verfahren zur Entfernung von organischen Peroxiden aus Prozeßwässern beansprucht, welches dadurch gekennzeichnet ist, das organische Peroxide aus Prozeßwässern durch thermische Zersetzung weitestgehend entfernt werden. Organische Peroxide in Prozeßwässern, insbesondere in Prozeßabwässern erhöhen die Giftigkeit solcher Wässer erheblich und es kommt zu Schwierigkeiten bei der Aufarbeitung in Kläranlagen mit biologischen Klärstufen. Die Konzentration der Peroxide in solchen Wässern läßt sich zwar durch Zumischen von unbelastetem Wasser verringern, jedoch ist diese Aufarbeitungsart weder wirtschaftlich noch ökologisch sinnvoll. Vor diesem Hintergrund wurde ein Verfahren entwickelt, welches die Peroxide durch thermische Zersetzung aus den Prozeßabwässern weitgehend entfernt. Dabei werden die Prozeßwässer auf eine Temperatur von mindestens 130 °C aufgeheizt und mindestens 20 min. bei dieser Temperatur belassen. Durch das Erhitzen des Prozeßwassers zersetzen sich die Peroxide zu Produkten, welches sich destillativ relativ einfach entfernen lassen. So behandelte Prozeßabwässer lassen sich nach Abkühlung, wobei die abgegebene Wärme zum Aufheizen des zu behandelnden Prozeßwassers genutzt werden kann, einer Kläranlage, ohne Schädigung der biologischen Klärstufe, zuführen.

Das erfindungsgemäße Verfahren wird unter anderem zur Entfernung von organischen Peroxiden aus den bei der Phenolherstellung bzw. der Oxidation von Cumol anfallenden Prozeßwässern genutzt.

## Beschreibung

Die vorliegende Erfindung betrifft ein Verfahren zur Entfernung von organischen Peroxiden aus Prozeßwässern.

Im besonderen betrifft die vorliegende Erfindung ein Verfahren zur Entfernung von organischen Peroxiden aus Prozeßwässern, die bei der Herstellung von Phenol nach der Hock'schen Phenolsynthese entstehen.

Ein Prozeß, der von großer wirtschaftlicher Bedeutung ist, ist der bei der Gewinnung von Phenol und Aceton ausgehend von Cumol nach dem klassischen Hock-Verfahren durchgeführte Prozeß der Oxidation von Cumol mittels Luftsauerstoff zu Cumolhydroperoxid. Bei diesem Prozeß fallen Prozeßwässer an, welche nicht ohne weiteres entsorgt werden können. Besonders erschwert wird die Aufarbeitung dieser Prozeßwässer durch die Tatsache, daß die Prozeßwässer einen Anteil an organischen Peroxiden, insbesondere Methylhydroperoxid, enthalten. Diese Peroxide erhöhen die Giftigkeit solcher Prozeßwässer erheblich, weshalb eine direkte Reinigung in einer biologischen Kläranlage nicht bzw. nur mit hohem Aufwand möglich ist.

Zur Senkung der Toxizität solcher Prozeßabwässer können diese bekanntermaßen mit Wasser vermischt werden, so daß die Konzentration an Peroxiden oder anderen giftigen Bestandteilen reduziert werden und somit eine Schädigung der biologischen Reinigungsstufe in der Kläranlage vermieden wird. Diese Verfahrensweise ist aber aufgrund des hohen Wasserverbrauchs unwirtschaftlich und auch ökologisch nicht sinnvoll.

Aufgabe der vorliegenden Erfindung war es deshalb, ein Verfahren zur Entfernung von organischen Peroxiden aus Prozeßwässern bereitzustellen, welches den Wasser- und Energieverbrauch bei der Behandlung von organische Peroxide enthaltenden Prozeßwässern deutlich reduziert.

Überraschenderweise wurde gefunden, daß ein Verfahren zur Entfernung von organischen Peroxiden aus Prozeßwässern, bei welchem die organischen Peroxide durch thermische Zersetzung aus den Prozeßwässern entfernt werden, mit deutlich weniger Wasser und Energie als andere Verfahren auskommt.

Gegenstand der vorliegenden Erfindung ist daher ein Verfahren zur Entfernung von organischen Peroxiden aus Prozeßwässern, welches dadurch gekennzeichnet, daß die organischen Peroxide durch thermische Zersetzung aus den Prozeßwässern entfernt werden.

Ebenfalls ist Gegenstand der vorliegenden Erfindung ein Verfahren zur Herstellung von Phenol aus Cumol nach dem Hock-Verfahren, welches dadurch gekennzeichnet, daß organische Peroxide durch thermische Zersetzung aus Prozeßwassern, die bei der Phenolherstellung nach dem Hock-Verfahren anfallen, entfernt werden.

Das erfindungsgemäße Verfahren hat den Vorteil, daß auf wirtschaftliche Weise der Gehalt an organischen Peroxiden soweit gesenkt werden kann, daß eine Aufarbeitung von Prozeßwässern bzw. Prozeßabwässern in einer Kläranlage mit biologischer Reinigungsstufe problemlos möglich ist.

Das erfindungsgemäße Verfahren wird im folgenden beispielhaft an Hand der Behandlung von Prozeßwassern, die bei der Herstellung von Phenol nach dem Hock-Verfahren anfallen, beschrieben, ohne auf die beschriebenen Ausführungsarten beschränkt zu sein.

Erfindungsgemäß können Prozeßwässer sowohl Prozeßabwässer als auch Prozeßwässer sein, die in anderen Prozessen als Ausgangsmaterial wieder eingesetzt werden.

Bei der Hock'schen Phenolsynthese wird Phenol aus Cumol hergestellt. Das Cumol wird mit Hilfe von Luftsauerstoff zu Cumolhydroperoxid oxidiert, welches anschließend in Aceton und Phenol gespalten wird. Bei diesen Prozessen der Phenolherstellung fallen Prozeßwässer bzw. Prozeßabwässer an, die aufbereitet und/oder entsorgt werden müssen. Diese Prozeßwässer bzw. Prozeßabwässer weisen zum Teil organische Peroxide, die im Oxidationsprozeß entstehen, wie z.B. Methylhydroperoxid, auf. Im Regelfall weisen diese Prozeßwasser bzw. -abwässer Peroxide in einer Konzentration von bis zu 4 % auf.

Erfindungsgemäß werden aus diesen Prozeßwässern bzw. Prozeßabwässern die organischen Peroxide durch thermische Zersetzung weitestgehend entfernt. Zu diesem Zweck werden die Prozeßwässer bzw. -abwässer auf eine Temperatur von über 150 °C gebracht und vorzugsweise für mindestens 20 min. bei dieser Temperatur belassen. Das Aufheizen der Prozeßwässer bzw. -abwässer kann z.B. in einer Rohrbündelapparatur durch Dampf erfolgen. Vorzugsweise erfolgt das Aufheizen und/oder das thermische Behandeln bei einem Druck, der größer als der Sättigungsdampfdruck des zu behandelnden Prozeßwassers bzw. -abwassers ist. Der pH-Wert der zu behandelnden Prozeßwässer bzw. -abwässer liegt in der Regel vorzugsweise im sauren Bereich, daß heißt unter einem pH-Wert von 7. Durch die thermische Behandlung werden die organischen Peroxide zersetzt. Bei der thermischen Zersetzung von Methylhydroperoxid entsteht beispielsweise Methanol als Hauptprodukt.

Die thermische Behandlung der Prozeßwässer bzw. -abwässer kann z.B. in einem Behälter erfolgen. Vorzugsweise ist dieser Behälter beheizbar ausgeführt. Das Aufheizen der zu behandelnden Prozeßwässer bzw. -abwässer kann im, vorzugsweise beheizbar ausgeführten Behälter oder vor Eintritt der Wässer in den Behälter, z.B. durch Dampf, elektrisch und/oder durch Nutzung der Wärme anderer Prozeßströme, welche abgekühlt werden sollen, erfolgen. Die thermische Behandlung kann diskontinuierlich oder kontinuierlich erfolgen. Bei einer kontinuierlichen Fahrweise wird das Volumen des Behälters vorzugsweise so gewählt, daß das zu behandelnde Prozeßwasser bzw. -abwasser mindestens für einen Zeitraum von 20 min. im Behälter verweilt. Bei einer diskontinuierlichen Ausführung des erfindungsgemäßen Verfahrens werden die zu behandelnden Prozeßwässer auf die entsprechende Temperatur gebracht und für mindestens 20 min. bei dieser Temperatur im Behälter belassen. Die so behandelten Prozeßwasser sind weitgehend von organischen Peroxiden befreit und können einer Aufarbeitung oder einer Verwertung zugeführt werden. Vorzugsweise weisen die erfindungsgemäß behandelten Prozeßwässer bzw. -abwässer einen Gehalt an Peroxiden kleiner 0,1 % auf.

Besonders bevorzugt werden die Prozeßwasser bzw. -abwässer nach genügend langer Verweilzeit im Behälter in eine Kolonne geflasht. In dieser Kolonne wird die Hauptmenge der bei der Zersetzung der Peroxide entstandenen Verbindungen, im Falle der Zersetzung von Methylhydroperoxid hauptsächlich das Methanol, sowie andere Leichtsieder, am Kopf der Kolonne durch Flashverdampfung und/oder Destillation abgetrennt. Zur Verringerung des Wassergehalts in dieser am Kopf der Kolonne abgezogenen Phase kann es vorteilhaft sein, einen Teil dieser Phase als Rücklauf auf den Kolonnenkopf aufzugeben. Die am Kopf der Kolonne abgezogene Phase kann einer weiteren Verwendung oder Aufarbeitung zugeführt werden.

Das im Sumpf der Kolonne anfallende, von organischen Peroxiden weitgehend gereinigte Prozeßwasser bzw. -abwasser kann einer weiteren Verwendung oder einer Kläranlage zur Aufbereitung zugeführt werden. Es kann vorteilhaft sein, das Prozeßwasser bzw. -abwasser vor der Zuführung zur Kläranlage oder zur weiteren Verwendung abzukühlen. Dies erfolgt vorzugsweise dadurch, daß das behandelte Prozeßwasser aus dem Sumpf der Destillationskolonne durch einen Wärmetauscher geführt wird, in welchem es die Wärme z.B. an das noch zu behandelnde Prozeßwasser bzw. -abwasser abgibt. Auf diese Weise lassen sich erhebliche Energiemengen einsparen, da ohne die Verwendung eines Wärmetauschers das zu behandelnde Prozeßwasser bzw. -abwasser ausschließlich energieintensiv, z.B. mit Dampf, aufgeheizt werden müßte. Ebenso kann die am Kopf der Kolonne abgenommene Phase durch einen Wärmetauscher und/oder Kondensator gefahren werden, in welchem diese Phase ihre Wärmeenergie an die zu behandelnden Wässer abgibt, bzw. die Kondensationswärme der am Kopf der Kolonne dampfförmig abgenommenen Phase zum Erhitzen der zu behandelnden Wässer genutzt wird. Als Kolonne eignen sich übliche Destillationskolonnen, deren Größen, ebenso wie die Anzahl der theoretischen Böden, durch einfache Vorversuche zu ermitteln sind.

In einer besonderen Ausführungsart des erfindungsgemäßen Verfahrens wird der pH-Wert der zu behandelnden Prozeßwässer bzw. -abwässer auf einen Wert von 9 bis 13, vorzugsweise auf einen Wert von 11 bis 12, eingestellt. Dies kann durch Zugabe einer Base, vorzugsweise ein Alkalihydroxid, insbesondere Natriumhydroxid, oder das Zumischen von Prozeßwässern bzw. Prozeßabwässern, welche alkalische Eigenschaften aufweisen, geschehen. Besonders bevorzugt wird ein Prozeßabwasser, welches bei der Extraktion eines bei der Abgasreinigung im Phenolprozeß anfallenden Cumolkondensats mit einer 2 bis 3 %igen Natronlauge anfällt und welches ebenfalls organische Peroxide enthalten kann, den zu behandelnden Prozeßwässern bzw. -abwässern zugemischt und zwar in der Weise, daß der oben genannte bevorzugte pH-Wert von 9 bis 13, besonders bevorzugt von 11 bis 12, in den zu behandelnden Wässern erreicht wird.

Es wurde überraschenderweise festgestellt, daß durch die Erhöhung der pH-Werte der zu behandelnden Prozeßwässer bzw. -abwässer auf Werte von 9 bis 13, die thermische Behandlung der Reaktionswässer bzw. -abwässer bei niedrigeren Temperaturen durchgeführt werden kann. Erfindungsgemäß kann die thermische Zersetzung dieser zu behandelnden alkalischen Prozeßwässer bzw. -abwässer bei Temperaturen von 130 bis 170 °C, besonders bevorzugt bei Temperaturen von 135 bis 145 °C durchgeführt werden.

Auch bei dieser Ausführungsart des erfindungsgemäßen Verfahrens findet die thermische Zersetzung der organischen Peroxide bevorzugt in einem Behälter statt, der wiederum so ausgelegt sein sollte, daß die zu behandelnden Prozeßwässer bzw. -abwässer bei kontinuierlicher oder diskontinuierlicher Ausführung des erfindungsgemäßen Verfahrens mindestens 20 min., vorzugsweise 20 bis 40 min., im Behälter verweilen. Der Druck im Behälter wird wiederum so eingestellt, daß der Druck größer als der Sättigungsdampfdruck der zu behandelnden Prozeßwässer bzw. -abwässer ist. Das Aufheizen der zu behandelnden Prozeßwässer bzw. -abwässer kann im, vorzugsweise beheizbar ausgeführten Behälter oder vor Eintritt der Wässer in den Behälter, z.B. mit Dampf, elektrisch und/oder durch Nutzung der Wärme anderer Prozeßströme, welche abgekühlt werden sollen, erfolgen.

Auch bei dieser Ausführungsart des erfindungsgemäßen Verfahrens kann es vorteilhaft sein, die behandelten Prozeßwässer bzw. -abwässer aus dem Behälter in eine Kolonne zu flashen, in welcher durch Flashverdampfung und/oder Destillation, die bei der Zersetzung der Peroxide entstandenen Produkte, bei der Zersetzung von Methylhydroperoxid das entstandene Methanol, sowie Leichtsieder von den zu behandelnden Prozeßwässern bzw. -abwässern abgetrennt werden und über Kopf aus der Kolonne entfernt werden. Zur Verringerung des Wassergehalts in dieser am Kopf der Kolonne abgezogenen Phase kann es vorteilhaft sein, einen Teil dieser Phase als Rücklauf auf den Kolonnenkopf aufzugeben. Die am Kopf der Kolonne abgezogene Phase kann einer weiteren Verwendung oder Aufarbeitung zugeführt werden.

Das im Sumpf der Kolonne anfallende, von organischen Peroxiden weitgehend gereinigte Prozeßwasser bzw. -abwasser kann einer weiteren Verwendung oder einer Kläranlage zur Aufbereitung zugeführt werden. Die nach dem erfindungsgemäßen Verfahren behandelten Prozeßwässer bzw. -abwässer weisen vorzugsweise einen Gehalt an Peroxiden von kleiner 0,1 %, besonders bevorzugt von kleiner 0,01 % auf.

Es kann wiederum vorteilhaft sein, das Prozeßwasser bzw. -abwasser vor der Zuführung zur Kläranlage oder zur weiteren Verwendung abzukühlen. Dies erfolgt vorzugsweise dadurch, daß das behandelte Prozeßwasser aus dem Sumpf der Destillationskolonne durch einen Wärmetauscher geführt wird, in welchem es die Wärme an das noch zu behandelnde Prozeßwasser bzw. -abwasser abgibt. Auf diese Weise lassen sich erhebliche Energiemengen einsparen, da ohne die Verwendung eines Wärmetauschers das zu. behandelnde Prozeßwasser bzw. -abwasser ausschließlich energieintensiv, z.B. mit Dampf oder elektrisch, aufgeheizt werden müßte. Ebenso kann die am Kopf der Kolonne abgenommene Phase durch einen Wärmetauscher und/oder Kondensator gefahren werden, in welchem diese Phase ihre Wärmeenergie an die zu behandelnden Wasser abgibt bzw. die zu behandelnden Prozeßwässer unter Nutzung der Kondensationswärme der am Kopf der Kolonne dampfförmig abgenommenen Phase aufgeheizt werden. Als Kolonne eignet sich eine übliche Destillationskolonne, deren Größe ebenso wie die Anzahl der theoretischen Böden durch einfache Vorversuche zu ermitteln ist.

Es kann bei beiden erfindungsgemäßen Ausführungsarten des Verfahrens vorteilhaft sein, nicht nur einen Teil der am Kopf der Destillationskolonne abgenommenen Phase wieder in die Kolonne einzuspeisen, sondern auch einen Teil des Sumpfproduktes.

Das erfindungsgemäße Verfahren kann kontinuierlich oder diskontinuierlich durchgeführt werden.

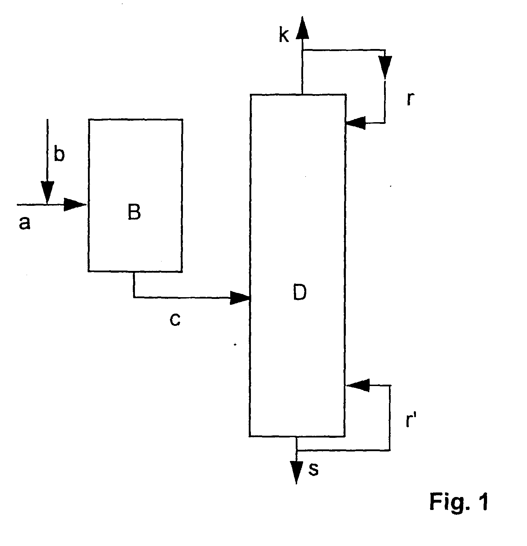

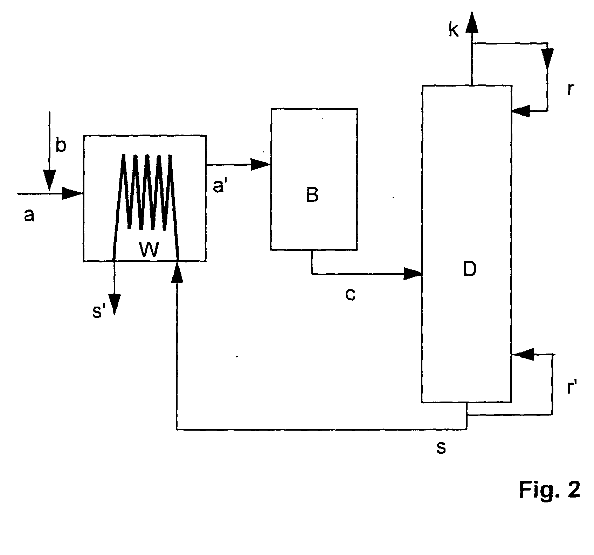

In den Abbildungen Fig. 1 und Fig. 2 sind beispielhaft Ausführungsarten des erfindungsgemäßen Verfahrens dargestellt, ohne daß das Verfahren auf diese beschränkt ist.

In Fig. 1 gelangen die zu behandelnden Prozeßwässer über Leitung **a** in den beheizbaren Behälter **B**. Über Leitung **b** kann den Prozeßwässern Alkalilauge oder Prozeßwasser mit alkalischen Eigenschaften zugemischt werden. Nach einer Verweilzeit der zu behandelnden Prozeßwässer im Behälter **B** von mindestens 20 min. werden die Prozeßwässer über Leitung **c** in die Kolonne **D** geflasht. Am Kopf der Kolonne **D** werden über Leitung **k** die von den Prozeßwässern abgetrennten Leichtsieder und/oder die bei der thermischen Zerstörung der Peroxide entstandenen Produkte, wie z.B. Methanol abgenommen und einer weiteren Aufarbeitung oder thermischen Verwertung zugeführt. Über Leitung **r** besteht die Möglichkeit, einen Teil der am Kopf der Kolonne abgenommenen Phase in die Kolonne zurückzuleiten. Am Sumpf der Kolonne läßt sich über Leitung **s** das behandelte Prozeßwasser aus der Kolonne ausschleusen und z.B. einer Kläranlage zuführen. Über Leitung **r'** kann ein Teil der aus dem Sumpf der Kolonne entnommenen Phase in die Kolonne zurückgeleitet werden.

In Fig. 2 ist eine Ausführung des erfindungsgemäßen Verfahrens dargestellt, bei welchem die Wärme der zu behandelten Prozeßwässer genutzt wird, um die zu behandelnden Prozeßwässer aufzuheizen. Die zu behandelnden Prozeßwässer gelangen über Leitung **a** in den Wärmetauscher **W**. Über Leitung **b** kann den Prozeßwässern Alkalilauge oder Prozeßwasser mit alkalischen Eigenschaften zugemischt werden. Die in dem Wärmetauscher **W** vorgewärmten, zu behandelnden Prozeßwässer gelangen über Leitung **a'** in den Behälter **B**. Nach einer Verweilzeit der zu behandelnden Prozeßwässer im Behälter **B** von mindestens 20 min. werden die Prozeßwässer über Leitung **c** in die Kolonne **D** geflasht. Am Kopf der Kolonne **D** werden über Leitung **k** die von den Prozeßwassern abgetrennten Leichtsieder und/oder die bei der thermischen Zerstörung der Peroxide entstandenen Produkte, wie z.B. Methanol, abgenommen und einer weiteren Aufarbeitung oder thermischen Verwertung zugeführt. Über Leitung **r** besteht die Möglichkeit, einen Teil der am Kopf der Kolonne abgenommenen Phase in die Kolonne zurückzuleiten. Am Sumpf der Kolonne wird über Leitung **s** das behandelte Prozeßwasser aus der Kolonne ausgeschleust und dem Wärmetauscher **W** zugeführt. Im Wärmetauscher gibt das behandelte Prozeßwasser seine Energie an das noch zu behandelnde Prozeßwasser ab und kühlt sich dabei ab. Über Leitung **s'** kann dieses kühlere, behandelte Prozeßwasser einer Aufarbeitung, z.B. einer Kläranlage, zugeführt werden. Über Leitung **r'** kann ein Teil der aus dem Sumpf der Kolonne entnommenen Phase in die Kolonne zurückgeleitet werden.

Das erfindungsgemäße Verfahren wird in den folgenden Beispielen erläutert, ohne darauf beschränkt zu sein.

### Beispiel 1:

3,0 t/h Abwasser mit einem Methylhydroperoxid-Gehalt von 3,0 % wurden bei einem pH-Wert von 4,8 für 35 Minuten einer Temperatur von 165 °C und einem Druck von 6,0 bar(g) ausgesetzt. Die Fischgiftigkeit des eingesetzten Abwassers lag bei über 1 : 900. Nach der erfindungsgemäßen Behandlung sank der Methylhydroperoxid-Gehalt auf 0,1 % und die Fischgiftigkeit auf 1 : 50. Bei der Bestimmung des biologischen Sauerstoffbedarfs (BSB5) trat noch eine deutliche Hemmung auf.

### Beispiel 2:

3,0 t/h Abwasser mit einem Methylhydroperoxid-Gehalt von 3,0 % wurden bei einem pH-Wert von 11,8 für 35 min. einer Temperatur von 140 °C und einem Druck von 3 bar(g) ausgesetzt. Nach der erfindungsgemäßen Behandlung des Abwassers lag der Methylhydroperoxid-Gehalt unter 0,01 % und die Fischgiftigkeit bei kleiner 1 : 5. Bei der Bestimmung des biologischen Sauerstoffbedarfs war keine Hemmung mehr nachweisbar.

## Patentansprüche

1. Verfahren zur Entfernung von organischen Peroxiden aus Prozeßwässern,
dadurch gekennzeichnet,
daß die organischen Peroxide durch thermische Zersetzung aus den Prozeßwässern entfernt werden.

2. Verfahren zur Herstellung von Phenol aus Cumol nach dem Hock-Verfahren,
dadurch gekennzeichnet,
daß organische Peroxide durch thermische Zersetzung aus Prozeßwässern, die bei der Phenolherstellung nach dem Hock-Verfahren anfallen, entfernt werden.

3. Verfahren nach zumindest einem der Ansprüche 1 oder 2,
dadurch gekennzeichnet,
daß die Prozeßwässer bei der Oxidation von Cumol zu Cumolhydroperoxid entstehen.

4. Verfahren nach zumindest einem der Ansprüche 1 bis 3,
dadurch gekennzeichnet,
daß die Prozeßwässer bei der Extraktion eines Cumolkondensats, welches bei der der Oxidation nachgeschalteten Abgasreinigung anfällt, mit einer Alkalilauge entstehen.

5. Verfahren nach zumindest einem der Ansprüche 1 bis 4,
dadurch gekennzeichnet,
daß die Prozeßwässer als organisches Peroxid Methylhydroperoxid aufweisen.

6. Verfahren nach zumindest einem der Ansprüche 1 bis 5,
dadurch gekennzeichnet,
daß die thermische Zersetzung bei einer Temperatur von 130 bis 170 °C durchgeführt wird.

7. Verfahren nach zumindest einem der Ansprüche 1 bis 6,
dadurch gekennzeichnet,
daß die thermische Zersetzung bei einer Temperatur von 135 bis 145 °C durchgeführt wird.

8. Verfahren nach zumindest einem der Ansprüche 1 bis 7,
dadurch gekennzeichnet,
daß die thermische Zersetzung bei einem Druck, der größer als der Sättigungsdampfdruck des Prozeßwassers ist, durchgeführt wird.

9. Verfahren nach zumindest einem der Ansprüche 1 bis 8,
dadurch gekennzeichnet,
daß die thermische Zersetzung bei einem pH-Wert von 9 bis 13, bevorzugt von 11 bis 12, durchgeführt wird.

10. Verfahren nach zumindest einem der Ansprüche 1 bis 9,
dadurch gekennzeichnet,
daß der pH-Wert der zu behandelnden Prozeßwässer durch Zumischen von Alkalihydroxid und/oder Prozeßwässern, die alkalische Eigenschaften aufweisen, eingestellt wird.

11. Verfahren nach zumindest einem der Ansprüche 1 bis 5,
dadurch gekennzeichnet,
daß die thermische Zersetzung bei einer Temperatur von mehr als 150 °C und einem pH-Wert kleiner 7 durchgeführt wird.

12. Verfahren nach zumindest einem der Ansprüche 1 bis 11,
dadurch gekennzeichnet,
daß die thermische Zersetzung mit einer Verweilzeit des zu behandelnden Prozeßwassers in einem Reaktionsbehälter von mehr als 20 min. durchgeführt wird.

13. Verfahren nach zumindest einem der Ansprüche 1 bis 12,
dadurch gekennzeichnet,
daß die bei der thermischen Zersetzung der organischen Peroxide gebildeten Produkte mittels Flashverdampfung und/oder Destillation in einer nachgeschalteten Kolonne aus den Prozeßwässern entfernt werden.

14. Verfahren nach zumindest einem der Ansprüche 1 bis 13,
dadurch gekennzeichnet,
daß das bei der thermischen Zersetzung des Methylhydroperoxid gebildete Methanol mittels Flashverdampfung in einer nachgeschalteten Kolonne aus den Prozeßwässern entfernt wird.

15. Verfahren nach zumindest einem der Ansprüche 1 bis 14,
dadurch gekennzeichnet,
daß zur Optimierung des Energieverbrauchs die Prozeßwässer durch Wärmeaustausch mit der am Kolonnensumpf und/oder am Kolonnenkopf abgenommenen Phase und/oder durch Nutzung der Kondensationswärme der am Kolonnensumpf und/oder am Kolonnenkopf abgenommenen Phase aufgeheizt werden.

16. Verfahren nach zumindest einem der Ansprüche 1 bis 15,
dadurch gekennzeichnet,
daß die erfindungsgemäß behandelten Prozeßwässer bzw. -abwässer einen Gehalt an Peroxiden kleiner 0,1 % aufweisen.
